# EUROPÄISCHE PATENTSCHRIFT

(11) **EP 4 449 167 B1**
(45) Veröffentlichungstag und Bekanntmachung des Hinweises auf die Patenterteilung: **10.06.2026**
(21) Anmeldenummer: 22821555.4
(22) Anmeldetag: 08.12.2022
(51) Int. Cl.: G02B 1/14, G02B 5/23, G02B 1/115, G02C 7/10, C09K 9/02

(54) **OPTISCHES ELEMENT MIT EINER SAUERSTOFF-UNDURCHLÄSSIGEN BARRIERESCHICHT**
OPTICAL ELEMENT HAVING AN OXYGEN-IMPERMEABLE BARRIER LAYER
ÉLÉMENT OPTIQUE PRÉSENTANT UNE COUCHE BARRIÈRE IMPERMÉABLE À L'OXYGÈNE

(30) Priorität: 15.12.2021 DE 102021133305
(43) Veröffentlichungstag der Anmeldung: 23.10.2024
(73) Patentinhaber: Rodenstock GmbH, 80687 München (DE)
(72) Erfinder: BEMETZ, Jonas, 81241 München (DE); ZINNER, Herbert, 85296 Rohrbach (DE); WEIGAND, Udo, 81247 München (DE); PISCH, Uwe, 85635 Höhenkirchen (DE); DELLER, Katrin, 80335 München (DE)
(74) Vertreter: Müller-Boré & Partner Patentanwälte PartG mbB
(86) Internationale Anmeldenummer: PCT/EP2022/084973
(87) Internationale Veröffentlichungsnummer: WO 2023/110617

(56) Entgegenhaltungen:
- EP-A1- 1 731 947
- AU-B2- 475 164
- DE-A1- 102006 048 338
- GB-A- 1 419 985
- JP-A- S6 122 327
- US-A1- 2009 316 246
- US-A1- 2019 092 950

## Beschreibung

Die vorliegende Erfindung betrifft ein optisches Element, das eine photochrome Schicht mit verbesserter UV- und Lichtstabilität aufweist, sowie ein Verfahren zur Herstellung eines solchen optischen Elements.

Im Stand der Technik sind optische Elemente mit einer photochromen Schicht bekannt. Dabei kann eine photochrome Schicht auch als eine selbsttönende Schicht bezeichnet werden. Je nach Intensität der auf dem optischen Element auftreffenden UV-Strahlung tönen sich photochrome Schichten selbst dunkel oder hell und damit auch das optische Element, auf dem sie aufgebracht sind. Das Eindunkeln bzw. Aufhellen der photochromen Schicht bzw. des optischen Elements beruht in diesem Fall auf einem photochromen Farbstoff, welcher infolge der Bestrahlung mit UV-Strahlung mit einer reversiblen Farbtonänderung reagiert. Durch die Bestrahlung mit UV-Strahlung wird dabei die molekulare Struktur des photochromen Farbstoffs und damit auch dessen Absorptionsverhalten geändert. Lässt die Bestrahlung mit UV-Strahlung nach, nimmt der photochrome Farbstoff wieder seine ursprüngliche molekulare Struktur und damit auch sein ursprüngliches Absorptionsverhalten an. Ein photochromer Farbstoff ermöglicht somit ein reversibles Hin- und Herschalten zwischen einer dunklen und einer hellen Tönung.

In der Regel werden auf optischen Elementen photochrome Schichten mit einer Dicke von mehr als 30 µm durch Angieß- oder Spin-Coating-Verfahren aufgetragen oder durch In-Masse-Verfahren in das Element eingemischt. Jedoch ist aus Qualitätsgründen das Aufbringen von photochromen Schichten mit einer Dicke von 30 µm oder kleiner, insbesondere mit einer Dicke von 10 µm oder kleiner, von Vorteil. Bei dem Aufbringen von photochromen Schichten mit einer Dicke von 30 µm oder kleiner, insbesondere mit einer Dicke von 10 µm oder kleiner, können Medien, in welchem der photochrome Farbstoff gelöst oder suspendiert ist, mit einer geringeren Viskosität eingesetzt werden. Die geringere Viskosität eines solchen Mediums führt zu einem konstanten Verlauf der photochromen Schichten und somit zu einer verbesserten Kosmetik des optischen Elements.

Allerdings werden photochrome Schichten, genauer der darin enthaltene photochrome Farbstoff, durch das Einwirken von Sauerstoff und UV-Strahlung geschädigt. Da die UV-Strahlung für die photochromen Eigenschaften der photochromen Schichten notwendig ist, kann die Schädigung der photochromen Schichten nur durch Minimierung der Sauerstoffdiffusion in die photochrome Schicht vermindert werden. In Fällen, in denen eine photochrome Schicht mit einer Dicke von mehr als 30 µm auf ein optisches Element aufgetragen ist, findet Sauerstoffdiffusion nur in dem oberen Bereich der photochromen Schicht statt. Der darunterliegende Teil ist vor der Sauerstoffdiffusion geschützt und kann nicht durch das Einwirken von Sauerstoff und UV-Strahlung geschädigt werden. Photochrome Schichten mit einer Dicke von mehr als 30 µm weisen daher in der Regel eine geringe Degradation durch Sauerstoff und UV-Strahlung auf.

Bei photochromen Schichten mit einer Dicke von 30 µm oder weniger, insbesondere von 10 µm oder weniger, findet jedoch eine Sauerstoffdiffusion über die komplette Schicht und damit eine Schädigung der gesamten Schicht statt. Solche photochromen Schichten benötigen daher mindestens eine Schutzschicht, um sie vor der Degradation durch Sauerstoff und UV-Strahlung zu schützen.

DE 10 2006 048338 A1 offenbart eine derartige photochrome Schicht geringer Schichtdicke, die durch eine zusätzliche Sauerstoff-undurchlässige Barriereschicht vor Degradation geschützt wird.

Hartschichten, die üblicherweise auf optischen Elementen aufgebracht werden, um diese vor Kratzern zu schützen, stellen keine Barriere für die Diffusion von Sauerstoff dar. Daher können sie keine darunterliegende photochrome Schicht vor der Degradation schützen. Antireflexionsschichten, die ebenfalls auf optischen Elementen aufgebracht sein können, um Reflexe an solchen Elementen zu vermeiden, können hingegen die Diffusion von Sauerstoff verringern. Allerdings sind diese sehr anfällig gegenüber Kratzern, wodurch der Schutz der photochromen Schicht vor Sauerstoffdiffusion an Stellen mit beschädigter Antireflexionsschicht lokal verloren gehen kann. Die dadurch entstehende lokale Degradation der photochromen Schicht ist anschließend als heller Strich in einem eingedunkelten Zustand des optischen Elements sichtbar.

Der vorliegenden Erfindung liegt somit die Aufgabe zugrunde, ein optisches Element bereitzustellen, in welchem die photochrome Schicht vor der Degradation durch Sauerstoff und UV-Strahlung geschützt ist.

Diese Aufgabe wird durch die in den Ansprüchen gekennzeichneten Ausführungsformen der vorliegenden Erfindung gelöst.

Insbesondere wird erfindungsgemäß ein optisches Element in Form eines Brillenglases, umfassend in der nachstehenden Reihenfolge ein Substrat, eine photochrome Schicht und eine Sauerstoff-undurchlässige Barriereschicht, bereitgestellt, wobei die Sauerstoff-undurchlässige Barriereschicht mindestens ein Polymer, ausgewählt aus der Gruppe, bestehend aus Ethylen-Vinylalkohol-Copolymer, Cellulosehydrat, Polyvinylalkohol, Polyacrylnitril, Polyvinyldichlorid, Polyurethan und Polyethylenterephthalat, umfasst.

Das erfindungsgemäße optische Element, welches in der nachstehenden Reihenfolge eine photochrome Schicht und eine Sauerstoff-undurchlässige Barriereschicht, umfassend mindestens ein Polymer, ausgewählt aus der Gruppe, bestehend aus Ethylen-Vinylalkohol-Copolymer, Cellulosehydrat, Polyvinylalkohol, Polyacrylnitril, Polyvinyldichlorid, Polyurethan und Polyethylenterephthalat, umfasst, ermöglicht den Schutz der photochromen Schicht vor der Degradation durch Sauerstoff und UV-Strahlung. Dadurch kann die Lebensdauer der photochromen Schicht und somit die Lebensdauer der photochromen Eigenschaften des optischen Elements deutlich erhöht werden. Die Sauerstoff-undurchlässige Barriereschicht kann zudem, im Gegensatz zu Antireflexionsschichten, auch unterhalb eines Hartlacks angeordnet werden, wodurch sie vor Kratzern geschützt ist. Eine lokale Schädigung der Sauerstoff-undurchlässigen Barriereschicht kann also durch das Anordnen der Sauerstoff-undurchlässigen Barriereschicht unter der Hartschicht vermieden werden. Eine lokale Schädigung der Sauerstoff-undurchlässigen Barriereschicht würde ansonsten zu einer lokalen Diffusion von Sauerstoff in die photochrome Schicht und damit zu einer Schädigung derer durch Sauerstoff und UV-Strahlung führen. Solche Schäden an der photochromen Schicht werden in einem eingedunkelten Zustand des optischen Elements als helle Bereiche wahrgenommen. Da Antireflexionsschichten nicht unter der Hartschicht angeordnet und daher nicht vor Kratzern oder anderer Beschädigung geschützt werden können, kann bei der Verwendung von für Kratzer anfälligen Antireflexionsschichten als Sauerstoffbarriere eine lokale Degradation der photochromen Schicht, die in einem eingedunkelten Zustand leicht erkennbar ist, auftreten. Solche lokalen Degradationen der photochromen Schicht können durch die Sauerstoff-undurchlässige Barriereschicht vermieden werden. Zudem beruht der Schutz der photochromen Schicht vor Degradation durch Sauerstoff und UV-Strahlung nicht auf teuren Antireflexionsschichten. Infolgedessen können optische Elemente mit dünneren photochromen Schichten auch ohne Antireflexionsschicht ausgestattet werden.

Ein weiterer Vorteil des erfindungsgemäßen optischen Elements liegt darin, dass in dem optischen Element dünnere photochrome Schichten, insbesondere mit einer Dicke von 30 µm oder weniger und bevorzugt 10 µm oder weniger, vorgesehen werden können, die während der Herstellung des optischen Elements durch Verfahren aufgebracht werden können, die den Verfahren zum Aufbringen von dickeren Schichten überlegen sind. Die Überlegenheit zeigt sich dabei unter anderem in einer reduzierten Lagerhaltung und einer größeren Flexibilität bezogen auf photochrome Farben, Vorfärbung und Eindunklungstiefen. Zudem können dünnere photochrome Schichten, insbesondere mit einer Dicke von 30 µm oder weniger und bevorzugt 10 µm oder weniger, durch Medien, in welchen der photochrome Farbstoff gelöst oder suspendiert ist, mit einer geringeren Viskosität hergestellt werden. Die geringere Viskosität des Mediums führt während des Aufbringens von solchen dünnen Schichten zu einem konstanten Verlauf der photochromen Schichten und somit zu einer verbesserten Kosmetik des optischen Elements. Demgegenüber besteht bei der Verwendung von Medien mit einer höheren Viskosität ein höheres Risiko von Lufteinschlüssen oder einem unregelmäßigen Verlauf der photochromen Schicht, wodurch eine unzufriedenstellende Kosmetik des optischen Elements durch sich abzeichnende Streifen oder Wellen verursacht werden kann.

Im Folgenden wird das erfindungsgemäße optische Element, umfassend in der nachstehenden Reihenfolge ein Substrat, eine photochrome Schicht, mitunter auch als Photolack bezeichnet, und eine Sauerstoff-undurchlässige Barriereschicht, mitunter auch Sauerstoff-Sperrschicht bezeichnet, näher erläutert.

Gemäß der vorliegenden Erfindung sind in dem optischen Element das Substrat, die photochrome Schicht und die Sauerstoff-undurchlässige Barriereschicht derart angeordnet, dass ausgehend von der Oberfläche des Substrats zunächst die photochrome Schicht angeordnet ist und in einer darauffolgenden Schicht die Sauerstoff-undurchlässige Barriereschicht vorgesehen ist. Die photochrome Schicht ist daher zwischen dem Substrat und der Sauerstoff-undurchlässigen Barriereschicht angeordnet. Prinzipiell kann zwischen der Sauerstoff-undurchlässigen Barriereschicht und der photochromen Schicht mindestens eine weitere Schichte angeordnet sein.

In einer bevorzugten Ausführungsform der vorliegenden Erfindung ist die Sauerstoff-undurchlässige Barriereschicht direkt auf der photochromen Schicht angeordnet. Dadurch kann die photochrome Schicht besser vor der Sauerstoffdiffusion geschützt werden als mit dazwischen liegenden zusätzlichen Schichten.

Die photochrome Schicht und die Sauerstoff-undurchlässige Barriereschicht können auf beiden Seiten oder auf einer Seite des Substrats angeordnet sein, bevorzugt beidseitig.

Neben der photochromen Schicht und der Sauerstoff-undurchlässigen Schicht kann das optische Element in bevorzugten Ausführungsformen der vorliegenden Erfindung mindestens eine weitere Schicht umfassen. Die möglichen weiteren Schichten können dabei aus der Gruppe, bestehend aus Grundierungsschicht, Hartschicht, Antireflexionsschicht und Pflegeleichtschicht, ausgewählt sein.

Die Anordnung der weiteren Schichten in dem optischen Element ist nicht weiter eingeschränkt, solange sie sich prinzipiell für das optische Element eignet und die weiteren Schichten ihre Funktion ausüben können.

In einer bevorzugten Ausführungsform ist die photochrome Schicht direkt auf dem Substrat aufgebracht.

Bevorzugte Schichtaufbauanordnungen des erfindungsgemäßen optischen Elements, ausgehend von der Oberfläche des Substrats, sind:
Substrat/ Grundierungsschicht/ photochrome Schicht/ Sauerstoff-undurchlässige Barriereschicht / Hartschicht/ Antireflexionsschicht/ Pflegeleichtschicht,
Substrat/ Grundierungsschicht/ photochrome Schicht/ Sauerstoff-undurchlässige Barriereschicht / Hartschicht/ Pflegeleichtschicht,
Substrat/ photochrome Schicht/ Sauerstoff-undurchlässige Barriereschicht/ Hartschicht/ Pflegeleichtschicht,
Substrat/ Grundierungsschicht/ photochrome Schicht/ Sauerstoff-undurchlässige Barriereschicht/ Hartschicht,
Substrat/ photochrome Schicht/ Sauerstoff-undurchlässige Barriereschicht/ Hartschicht/ Antireflexionsschicht/ Pflegeleichtschicht,
Substrat/ photochrome Schicht/ Sauerstoff-undurchlässige Barriereschicht/ Hartschicht/ Antireflexionsschicht, und
Substrat/ photochrome Schicht/ Sauerstoff-undurchlässige Barriereschicht/ Hartschicht,
wobei die Schichtaufbauanordnung
Substrat/ photochrome Schicht/ Sauerstoff-undurchlässige Barriereschicht/ Hartschicht besonders bevorzugt ist.

Unabhängig davon, ob die photochrome Schicht und die Sauerstoff-undurchlässige Barriereschicht auf beiden Seiten oder auf einer Seite des Substrats angeordnet sind, können die weiteren Schichten, soweit vorhanden, jeweils unabhängig voneinander auf beiden Seiten oder auf einer Seite des Substrats angeordnet sein. Die Grundierungsschicht, Hartschicht und Pflegeleichtschicht sind bevorzugt unabhängig voneinander auf beiden Seiten des Substrats angeordnet, die Antireflexionsschicht aus Kostengründen bevorzugt auf einer Seite.

Gemäß der vorliegenden Erfindung unterliegt das Substrat als solches keinen besonderen Einschränkungen, solange es sich prinzipiell für die Verwendung in einem optischen Element eignet und mit mindestens einer photochromen Schicht und einer Sauerstoff-undurchlässigen Barriereschicht beschichtbar ist. Ein optisches Element bezeichnet dabei ein Brillenglas.

In Bezug auf das Grundmaterial ist das Substrat nicht weiter eingeschränkt. So kann das Substrat aus Mineralglas oder aus Kunststoffglas gefertigt sein. Kunststoffglas hat gegenüber Mineralglas den Vorteil, dass es eine geringere Dichte und damit ein geringeres Gewicht aufweist. Weiterhin weisen aus Kunststoffglas gefertigte Substrate eine erhöhte Bruchsicherheit auf. Als Kunststoffmaterialien kommen hier beispielsweise Polythiourethan, Polyurethan, Polymethylmethacrylat, Polycarbonat, Polyacrylat oder Polydiethylenglycolbisallylcarbonat sowie Kombinationen hiervon in Frage, wobei prinzipiell auch andere transparente Kunststoffmaterialien verwendet werden können.

In Bezug auf seine geometrische Form kann das Substrat grundsätzlich planparallel, bikonkav, plankonkav, konvexkonkav, konkavkonvex, plankonvex oder bikonvex sein.

Gemäß der vorliegenden Erfindung ist das optische Element ein Brillenglas.

Das Grundmaterial des Substrats eines Brillenglases wird dabei so gewählt, dass das Brillenglas typischerweise einen Brechungsindex in einem Bereich von 1,45 bis 1,90, insbesondere in einem Bereich von 1,45 bis 1,55, in einem Bereich von 1,59 bis 1,68 oder in einem Bereich von 1,70 bis 1,76 aufweist. Es können somit Brillengläser aus Standardglas mit einem Brechungsindex von etwa 1,50, aus Qualitätsglas mit einem Brechungsindex von etwa 1,60 bzw. 1,67 oder aus Premiumglas mit einem Brechungsindex von etwa 1,74 verwendet werden.

Typischerweise ist die Vorderfläche des Substrats eines Brillenglases konvex geformt, während die zum Auge liegende Rückfläche konkav geformt ist. Hierbei wird die geometrische Form bei Brillengläsern mit positiver Brechkraft als konkavkonvex und bei Brillengläsern mit negativer Brechkraft als konvexkonkav bezeichnet. Was die geometrische Form des Substrats des Brillenglases anbelangt, sind weiterhin noch Gleitsichtgläser zu nennen. Diese werden im Stand der Technik auch als Progressivgläser bezeichnet.

Die photochrome Schicht und die Sauerstoff-undurchlässige Barriereschicht werden bevorzugt nur auf der Vorderseite des Substrats, d.h. der dem Auge abgewandten Seite, angeordnet, um nachteilige Effekte auf das photochrome Verhalten des Brillenglases durch unterschiedliche Lichtintensitäten an verschiedenen Stellen des Brillenglases zu vermeiden. Die Antireflexionsschicht ist, falls vorhanden, bevorzugt auf der Vorderseite des Substrats, d.h. der dem Auge abgewandten Seite, angeordnet.

Gemäß der vorliegenden Anmeldung umfasst die photochrome Schicht mindestens einen photochromen Farbstoff. Unter photochromen Farbstoffen wird ein Farbstoff verstanden, in welchem durch Licht (sichtbares Licht oder UV-Strahlung) eine Änderung des Absorptionsverhaltens induziert wird. Je nach Anwendung wählt der Fachmann mindestens einen geeigneten photochromen Farbstoff aus, wobei grundsätzlich auch die Kombination mehrerer photochromer Farbstoffe in Frage kommt. Ein Kriterium hierbei, neben der eigentlichen Anwendung, ist der zu erzielende Farbton, welchen das optische Element aufweisen soll, etwa bei Abwesenheit bzw. Anwesenheit von Licht einer bestimmten Intensität.

Im Stand der Technik sind verschiedene Verbindungsklassen photochromer Farbstoffe bekannt. Häufig handelt es sich hierbei um Benzopyrane oder höhere annellierte Ringsysteme davon, Chromene, Viologene, Fulgide und Fulgimide sowie insbesondere auch um Spiroverbindungen wie Spirooxazine oder Spiropyrane, ohne jedoch hierauf beschränkt zu sein. Mehrere dieser photochromen Farbstoffe können auch miteinander kombiniert werden.

Die photochrome Schicht kann zudem eine Matrix, umfassend mindestens ein transparentes Kunststoffmaterial, für den bzw. die einzusetzenden photochromen Farbstoff(e) enthalten. Dafür eingesetzte transparente Kunststoffmaterialien sind nicht weiter eingeschränkt und dem Fachmann bekannt. Beispielsweise kann ein transparentes Homo- oder Copolymer, ausgewählt aus der Gruppe, bestehend aus Polymethacrylaten, wie beispielsweise Poly(methylmethacrylat), Poly(ethylenglykol-bismethacrylat), Polyacrylaten, poly(ethoxyliertem Bis-phenol-A-dimethacrylat), thermoplastischem Polycarbonat, Polyvinylacetat, Polyvinylbutyral, Polythiourethan, Polyurethan oder ein Polymer, ausgewählt aus der Gruppe, bestehend aus Diethylenglykolbis(allylcarbonat)monomeren, Diethylenglykoldimethacrylatmonomeren, ethoxylierten Phenolmethacrylatmonomeren, ethoxylierten Diisopropenylbenzolmonomeren und ethoxylierten Trimethylolpropantriacrylatmonomeren, bevorzugt Polymethacrylate oder Polyacrylate, als transparentes Kunststoffmaterial verwendet werden.

In einer bevorzugten Ausführungsform der vorliegenden Erfindung beträgt die Dicke der photochromen Schicht mindestens 1 µm, bevorzugt mindestens 2 µm und besonders bevorzugt mindestens 3 µm. Zudem beträgt die Dicke der photochromen Schicht erfindungsgemäß höchstens 30 µm und besonders bevorzugt höchstens 10 µm. Die angegebenen Bereiche der Dicke können dabei frei kombiniert werden. Die Dicke der photochromen Schicht kann beispielsweise 2 µm bis 30 µm, besonders bevorzugt 3 µm bis 10 µm betragen.

Photochrome Schichten mit einer geringeren Dicke, insbesondere mit einer Dicke von 30 µm oder weniger, bevorzugt 10 µm oder weniger, können während der Herstellung des optischen Elements durch Verfahren aufgebracht werden, die den Verfahren zum Aufbringen von dickeren Schichten in Bezug auf die Prozessführung überlegen sind. Die Überlegenheit zeigt sich dabei unter anderem in einer reduzierten Lagerhaltung und einer größeren Flexibilität bezogen auf photochrome Farben, Vorfärbung und Eindunklungstiefen.

Weiter kann im Falle von dünneren photochromen Schichten, insbesondere mit einer Dicke von 30 µm oder weniger und bevorzugt 10 µm oder weniger, die Viskosität des Mediums, in welchem der photochrome Farbstoff gelöst oder suspendiert ist, in dem Verfahren zur Herstellung des optischen Elementes verringert werden. Durch die Verwendung von Medien mit einer niedrigeren Viskosität kann das Risiko von Lufteinschlüssen oder einem unregelmäßigen Verlauf der photochromen Schicht verringert und dadurch eine negative Kosmetik des optischen Elements durch sich abzeichnende Streifen oder Wellen vermieden werden. Dabei gilt je dünner die photochrome Schicht ist, desto niedriger kann die Viskosität des Mediums, in welchem der photochrome Farbstoff gelöst oder suspendiert ist, sein. Besonders für photochrome Schichten mit einer Dicke von 30 µm oder weniger, bevorzugt 10 µm oder weniger, kann so ein Medium, in welchem der photochrome Farbstoff gelöst oder suspendiert ist, mit ausreichend niedriger Viskosität verwendet werden, um eine negative Kosmetik des optischen Elements durch sich abzeichnende Streifen oder Wellen zu vermeiden.

Verschiedene Verfahren zum Aufbringen photochromer Schichten sind dem Fachmann aus dem Stand der Technik bekannt. So kann der photochrome Farbstoff als solcher oder in einem Kunststoffmaterial eingebettet auf das Substrat aufgebracht werden. Beispielsweise kann der photochrome Farbstoff in einem Kunststoffmaterial aufgelöst oder dispergiert werden, z.B. durch die Zugabe des photochromen Farbstoffs zu einem monomeren Material oder Vorpolymer, bevor die Polymerisation erfolgt, und das Kunststoffmaterial, enthaltend den photochromen Farbstoff, auf das Substrat aufgetragen werden. Neben einem zu polymerisierendem Monomer oder Vorpolymer kann auch ein auspolymerisiertes Polymer zusammen mit dem photochromen Farbstoff gelöst werden. Diese Lösung wird auf das Substrat aufgebracht und härtet durch das Abdampfen des Lösungsmittels aus. Gegebenenfalls kann die photochrome Schicht durch chemische Vernetzung der enthaltenen Matrix-bildenden Kunststoffmaterialien zusätzlich gehärtet werden. Vorzugsweise wird die photochrome Schicht nur getrocknet und nicht zusätzlich chemisch gehärtet. Dadurch können während des Auftragens aufgetretene Fehler, beispielsweise Blasenbildung, durch eine selektive Entfernung der gebildeten Schicht einfacher korrigiert werden. Das Kunstoffmaterial mit dem eingebetteten photochromen Farbstoff kann z.B. durch Spincoating, Dipcoating oder Spraycoating aufgetragen werden, ohne jedoch auf diese Methoden beschränkt zu sein. Das Spincoating-Verfahren eignet sich insbesondere zum Aufbringen von photochromen Schichten mit einer Dicke von über 30 µm. Es sind aber auch Dicken von 30 µm oder weniger durch das Spincoating-Verfahren möglich. Dipcoating, auch als Tauchverfahren bezeichnet, eignet sich insbesondere zum Auftragen von photochromen Schichten mit einer Dicke von 10 µm oder weniger. Bei der letzteren Variante kann eine überraschend geringere Migrationsneigung des photochromen Farbstoffs in andere Schichten erzielt werden. Dabei wird ein zuvor bereitgestelltes Substrat in ein Färbebecken eingetaucht. Dieses enthält einen in einem flüssigen Medium gelösten oder dispergierten photochromen Farbstoff. Das Medium enthält zusätzlich ein Lösungsmittel und optional ein Matrix bildendes Polymer. Infolge des Eintauchens in das Färbebecken wird das Substrat mit einem Film, bestehend aus obigen Medium, versehen und anschließend bei einer bestimmten Geschwindigkeit aus dem Färbebecken gezogen. Die Geschwindigkeit des Herausziehens aus dem Färbebecken ist nicht weiter beschränkt, solange eine photochrome Schicht mit gewünschten Eigenschaften aufgetragen werden kann. Vorzugsweise beträgt die Geschwindigkeit 0,5 bis 4 mm/s. Durch Abdampfen des Lösungsmittels des Films, der sich auf der Oberfläche des herausgezogenen Substrats gebildet hat, wird die photochrome Schicht in eine feste Form überführt. Gegebenenfalls kann das darin enthaltene Matrix-bildende Polymer zusätzlich chemisch ausgehärtet werden. Entsprechende Verfahren sind dem Fachmann ausreichend bekannt. Das Eintauchen in ein Färbebecken sollte derart erfolgen, dass das nach einem Nachbearbeiten erhaltene, mit einer photochromen Schicht versehene Substrat eine vorgegebene Zieltransmission aufweist. Die Transmission hängt dabei auch vom Ausmaß der Farbstoffaufnahme ab und lässt sich daher durch die zeitliche Dauer des Eintauchens einstellen. Neben dem Eintauchen in eine Farblösung kann auch ein gefärbter Lack aufgetragen werden, welcher die Farbstoffe an das Substrat abgibt und anschließend wieder entfernt wird.

Gemäß der vorliegenden Erfindung umfasst die Sauerstoff-undurchlässige Barriereschicht mindestens ein Polymer, ausgewählt aus der Gruppe, bestehend aus Ethylen-Vinylalkohol-Copolymer, Cellulosehydrat, Polyvinylalkohol, Polyacrylnitril, Polyvinyldichlorid, Polyurethan und Polyethylenterephthalat. In einer bevorzugten Ausführungsform umfasst die Sauerstoff-undurchlässige Barriereschicht mindestens ein Polymer, ausgewählt aus der Gruppe, bestehend aus Ethylen-Vinylalkohol-Copolymer, Cellulosehydrat, Polyvinylalkohol, Polyacrylnitril, Polyvinyldichlorid und Polyethylenterephthalat. Die Sauerstoff-undurchlässige Barriereschicht umfasst bevorzugt mindestens ein Polymer, ausgewählt aus Ethylen-Vinylalkohol-Copolymer und Polyvinylalkohol, weiter bevorzugt umfasst es ein Ethylen-Vinylalkohol-Copolymer. Derartige Polymere sind in der Lage, eine transparente Filmbildung zu leisten. Das Ethylen-Vinylalkohol-Copolymer kann dabei einen Hydrolysegrad von 92 mol-% oder mehr, bevorzugt 95 mol-% oder mehr, besonders bevorzugt 99 mol-% oder mehr, aufweisen. Umfasst die Sauerstoff-undurchlässige Barriereschicht mehr als ein Polymer, so können sämtliche Polymere, mehrere Polymere oder nur ein Polymer die nachstehend genannten Eigenschaften aufweisen. Die Sauerstoff-undurchlässigen Eigenschaften der Barriereschicht ergeben sich zusammen aus der Sauerstoff-Permeabilität des Polymers und der Schichtdicke der Sauerstoff-undurchlässigen Barriereschicht. Bevorzugt wird eine Sauerstoff-undurchlässige Barriereschicht mit einer Schichtdicke von unter 2 µm, besonders bevorzugt unter 1 µm aufgebracht, um Haftung, Kosmetik und optische Eigenschaften des optischen Elements nicht negativ zu beeinflussen.

Das mindestens eine Polymer weist bevorzugt eine Sauerstoff-Permeabilität ≤ 0,5 mL·m·m⁻²·Tag⁻¹·Pa⁻¹und besonders bevorzugt von ≤ 0,01 mL·m·m⁻²·Tag⁻¹·Pa⁻¹ auf. Die Sauerstoff-Permeabilität des Polymers wird gemäß ISO15105 gemessen. Weiter wird das mindestens eine Polymer in der Regel derart gewählt, dass eine 4-%ige wässrige Lösung davon bei 20°C eine Viskosität von 0,1 bis 30 mPa·s aufweist. Die Viskosität der 4-%igen wässrigen Lösung wird mittels eines Rotationsviskosimeters bei einer Schergeschwindigkeit von 23-30 mPa·s und einer Temperatur von 20 °C gemessen.

In einer bevorzugten Ausführungsform der vorliegenden Erfindung weist das mindestens eine Polymer eine massengewichtete Molmasse (M_{w}) im Bereich von 10 000 g/mol bis 130 000 g/mol, bevorzugt 80 000 g/mol bis 110 000 g/mol, bestimmt mittels Gelpermeations-Chromatographie (GPC) mit Lichtstreudetektion nach DIN EN ISO 16014-5, auf.

Neben dem mindestens einem Polymer kann die Sauerstoff-undurchlässige Barriereschicht weitere Komponenten enthalten, die das Fließverhalten des Mediums zum Bilden der Sauerstoff-undurchlässigen Barriereschicht während der Herstellung, die Haftung der Sauerstoff-undurchlässigen Barriereschicht zu den angrenzenden Schichten des optischen Elements oder die Benetzung der Sauerstoff-undurchlässigen Barriereschicht verbessern sowie eine glattere Oberfläche der Sauerstoff-undurchlässigen Barriereschicht bewirken.

Gemäß der vorliegenden Erfindung weist die Sauerstoff-undurchlässige Barriereschicht eine Schichtdicke von 0,1 µm bis 4 µm, besonders bevorzugt von 0,3 µm bis 2 µm auf. In diesem Bereich der Schichtdicke wird die Diffusion von Sauerstoff in die photochrome Schicht ausreichend verhindert, ohne dabei die Eigenschaften des optischen Elements negativ zu beeinflussen.

Das Aufbringen der Sauerstoff-undurchlässigen Barriereschicht unterliegt keiner besonderen Beschränkung, solange die Sauerstoff-undurchlässige Barriereschicht die photochrome Schicht ausreichend vor Sauerstoffdiffusion schützt und die Eigenschaften des optischen Elements nicht beeinträchtigt. Verschiedene dafür geeignete Verfahren sind dem Fachmann aus dem Stand der Technik bekannt. Beispielsweise kann die Sauerstoff-undurchlässige Barriereschicht durch ein Tauchverfahren, Sprühverfahren oder Spincoatverfahren auf das Substrat aufgebracht werden. Solche Verfahren umfassen das Lösen oder Suspendieren der die Sauerstoff-undurchlässige Barriereschicht bildenden Polymere und gegebenenfalls weiterer Komponenten in einem Lösungsmittel oder einer Kombination von Lösungsmitteln, das Aufbringen der Lösung oder Suspension auf das Substrat und das Überführen der Sauerstoff-undurchlässigen Barriereschicht durch Trocknung in eine feste Form. Geeignete Lösungsmittel, um die Sauerstoff-undurchlässige Barriereschicht bildenden Polymere und gegebenenfalls weiterer Komponenten ausreichend zu suspendieren oder zu lösen, sowie geeignete Konzentrationen der Lösung oder Suspension sind dem Fachmann bekannt.

Um die Anhaftung der auf dem Substrat angeordneten Schichten zu begünstigen, kann zu diesem Zweck das Substrat mit einer Grundierungsschicht versehen werden. Bevorzugt wird jedoch keine Grundierungsschicht auf dem Substrat angeordnet. In einem solchen optischen Element liegt dann keine Grundierungsschicht zwischen dem Substrat und der photochromen Schicht vor.

Die Grundierungsschicht kann neben der Haftfestigkeit der Beschichtung auch die Bruchfestigkeit des Substrats erhöhen. Um die Haftfestigkeit zwischen der Barriereschicht und anderen Schichten zu erhöhen, kann eine Grundierungsschicht zusätzlich auch unterhalb und/oder oberhalb der Barriereschicht angeordnet sein. Schichtdicken, Materialien sowie Verfahren zum Aufbringen einer solchen Grundierungsschicht sind dem Fachmann ausreichend bekannt. Das Substrat lässt sich beispielsweise mittels Tauchverfahren, Sprühverfahren oder Spincoatverfahren mit einer Grundierungsschicht versehen.

Wie eingangs erwähnt, kann auf das Substrat eine Hartschicht aufgebracht werden, um die Sauerstoff-undurchlässige Barriereschicht vor Beschädigungen zu schützen. Dies ist auch dann sinnvoll, wenn das Substrat aus Kunststoffglas gefertigt ist, da es sich hierbei um ein vergleichsweise weiches Material handelt und somit die Anfälligkeit eines daraus gefertigten optischen Elements gegenüber Kratzern höher ist als bei Mineralglas. Die Hartschicht ist bevorzugt auf der von der photochromen Schicht abgewandten Seite der Sauerstoff-undurchlässigen Barriereschicht angeordnet.

Die Hartschicht kann einen ein- oder mehrschichtigen Aufbau aufweisen. Zur Herstellung der Hartschicht können verschiedene Materialien und Verfahren eingesetzt werden, welche ein Fachmann in geeigneter Weise auswählt. Üblicherweise wird die Hartschicht in der Form eines Hartlacks oder eines anorganischen Materials, insbesondere auf Quarzbasis, aufgebracht. Es ist jedoch bevorzugt, eine Hartschicht auf Basis eines Acrylpolymers, eines Urethanpolymers, eines Melaminpolymers, eines Silikonharzes oder eines anorganischen Materials, insbesondere auf Quarzbasis, zu verwenden. Die Hartschicht kann dabei vollständig oder bereichsweise oberhalb der Sauerstoff-undurchlässigen Schicht und auf einer oder auf beiden Seiten des Substrats angeordnet sein. Eine über der Sauerstoff-undurchlässigen Barriereschicht angeordnete Hartschicht schützt die darunter liegende Sauerstoff-undurchlässige Barriereschicht vor Kratzern oder anderen mechanischen Beschädigungen, wodurch der Schutz der photochromen Schicht vor Degradation durch Sauerstoffdiffusion aufrechterhalten wird. Bevorzugt wird ein Silikonharz als Hartschicht auf die Oberfläche des optischen Elements aufgebracht, beispielsweise ausgehend von Siloxanen.

Eine geeignete Schichtdicke für die Hartschicht ist nicht weiter beschränkt und kann durch den Fachmann ohne Weiteres bestimmt werden. Vorzugsweise weist die Hartschicht eine Schichtdicke von 20 µm oder weniger, bevorzugt von 1 bis 15 µm und besonders bevorzugt von 1 bis 5 µm auf.

Das Aufbringen eines Hartlacks erfolgt in der Regel mittels üblicher Verfahren, wie ein Tauchverfahren, ein Sprühverfahren oder ein Spincoatverfahren. Handelt es sich bei der Hartschicht hingegen um ein anorganisches Material, etwa um ein Material auf Quarzbasis, kann dieses mittels physikalischer oder chemischer Gasphasenabscheidung auf das Substrat aufgebracht werden. Dafür geeignete Verfahren sind dem Fachmann ausreichend bekannt.

Des Weiteren kann das optische Element eine Antireflexionsschicht aufweisen. In einer Ausführungsform der vorliegenden Erfindung enthält das optische Element keine Antireflexionsschicht. In solchen Fällen kann ein kostengünstigeres optisches Element mit verbesserter UV- und Lichtstabilität erhalten werden. Wie die Hartschicht kann auch die Antireflexionsschicht einen ein- oder mehrschichtigen Aufbau aufweisen. Einem Fachmann sind derartige ein- oder mehrschichtig aufgebaute Antireflexionsschicht bekannt, wobei im Falle einer mehrschichtig aufgebauten Antireflexionsschicht die Anzahl der Schichten grundsätzlich nicht weiter eingeschränkt ist. Bei einer mehrschichtig aufgebauten Antireflexionsschicht wird die Schichtfolge üblicherweise derart gewählt, dass an eine Schicht mit einem niedrigen Brechungsindex bestimmter Schichtdicke eine Schicht mit einem hohen Brechungsindex bestimmter Schichtdicke angrenzt. Mit anderen Worten ist es für einen derartigen Aufbau bevorzugt, dass Schichten mit einem niedrigen Brechungsindex und Schichten mit einem hohen Brechungsindex alternierend angeordnet sind.

Entsprechende Materialien und Schichtdicken zur Realisierung eines solchen Aufbaus sind dem Fachmann bekannt. So kann die Antireflexionsschicht aus einer Abfolge verschiedener transparenter Materialien, darunter beispielsweise SiO₂, SiO, Ta₂O₅, TiO₂, ZrO₂, Al₂O₃, Nd₂O₅, Pr₂O₃, PrTiO₃, La₂O₃, Nb₂O₅, Y₂O₃, HfO₂, InSn-Oxid (ITO), Si₃N₄, MgO, MgF₂, CeO₂ und ZnS, umfassen, ohne jedoch hierauf beschränkt zu sein. Unter diesen Materialien weisen einige, wie etwa SiO₂, einen vergleichsweise niedrigen Brechungsindex auf, während wiederum andere, wie etwa Ta₂O₅, einen vergleichsweise hohen Brechungsindex aufweisen.

Die Schichtdicke der Antireflexionsschicht mit einem ein- oder mehrschichtigen Aufbau unterliegt grundsätzlich keiner besonderen Beschränkung. Sie weist jedoch vorzugsweise eine Schichtdicke von 2000 nm oder weniger, bevorzugt 1500 nm oder weniger und besonders bevorzugt 300 nm oder weniger auf. Die Schichtdicke der Antireflexionsschicht beträgt dabei gleichzeitig 100 nm oder mehr. Bei einem mehrschichtigen Aufbau der Antireflexionsschicht wird die Schichtdicke jeder einzelnen Schicht wie vorstehend angegeben in geeigneter Weise eingestellt. Zusätzlich können weitere Schichten, beispielsweise Haftschichten (z.B. mit einer Schichtdicke in einem Bereich von ca. 5 nm bis 5 µm), die keine optische Funktion aufweisen müssen, jedoch für die Beständigkeit, Haftungseigenschaften, Klimabeständigkeit, etc., vorteilhaft sein können, in der Antireflexionsschicht vorgesehen werden.

Die jeweiligen Schichten der Antireflexionsschicht können mittels Tauchverfahren, Sprühverfahren oder Spincoatverfahren sowie physikalischer oder chemischer Gasphasenabscheidung aufgebracht werden, die dem Fachmann ausreichend bekannt sind. Beispielhafte Verfahren für das Aufbringen mittels physikalischer Gasphasenabscheidung sind Elektronenstrahlverdampfen aus einem Tiegel, Widerstandsverdampfen aus einem Schiffchen und Plasmaunterstützung während des Verdampfens, ohne jedoch hierauf beschränkt zu sein.

Im Weiteren kann bei Bedarf eine Pflegeleichtschicht, mitunter auch als "Topcoat", "Cleancoat" oder hydrophobe und/oder oleophobe Beschichtung bezeichnet, welche der Abweisung von Schmutz und Wassertropfen dient, auf dem Substrat angeordnet werden. So kann die Pflegeleichtschicht vorzugsweise ein Silan, Siloxan oder Silazan mit mindestens einer Fluor enthaltenden Gruppe, die vorzugsweise mehr als 20 Kohlenstoffatome aufweist, umfassen. Das Silan, Siloxan oder Silazan mit mindestens einer Fluor enthaltenden Gruppe basiert vorzugsweise auf einem Silan, Siloxan oder Silazan mit mindestens einer hydrolysierbaren Gruppe. Geeignete hydrolysierbare Gruppen unterliegen keiner besonderen Beschränkung und sind einem Fachmann bekannt.

Die Schichtdicke der Pflegeleichtschicht unterliegt grundsätzlich keiner besonderen Beschränkung. Sie weist jedoch vorzugsweise eine Schichtdicke von 50 nm oder weniger und bevorzugt 20 nm oder weniger auf.

Dem Fachmann sind entsprechende Materialien und Maßnahmen zum Aufbringen einer solchen Pflegeleichtschicht bekannt.

In einem weiteren Aspekt betrifft die vorliegende Erfindung ein Verfahren zur Herstellung eines optischen Elements in Form eines Brillenglases, umfassend in der nachstehenden Reihenfolge die Schritte:
(a) Bereitstellen eines Substrats,
(b) Aufbringen einer photochromen Schicht mit einer Dicke von 30 µm oder weniger und
(c) Aufbringen einer Sauerstoff-undurchlässigen Barriereschicht mit einer Schichtdicke von 0,1 µm bis 4 µm, vorzugsweise direkt auf die photochrome Schicht.

Im Folgenden wird das erfindungsgemäße Herstellungsverfahren, mit dem das erfindungsgemäße optische Element erhalten werden kann, näher erläutert:
Im ersten Schritt wird zunächst ein Substrat bereitgestellt. Wie bereits vorstehend näher ausgeführt, unterliegt das Substrat als solches keinen besonderen Einschränkungen. Die vorstehenden Ausführungen, wie sie diesbezüglich im Zusammenhang mit dem erfindungsgemäßen optischen Element getroffen worden sind, gelten für das erfindungsgemäße Herstellungsverfahren entsprechend.

In einem darauffolgenden Schritt wird auf das Substrat eine photochrome Schicht aufgebracht. In einer bevorzugten Ausführungsform des erfindungsgemäßen Verfahrens wird die photochrome Schicht direkt auf das Substrat aufgebracht. Wie vorstehend erwähnt, ist dem Fachmann das Aufbringen von photochromen Schichten aus dem Stand der Technik bekannt und für den Schritt des Aufbringens der photochromen Schicht gelten die vorstehenden Ausführungen, wie sie diesbezüglich für das erfindungsgemäße optische Element getroffen worden sind, entsprechend.

In einem weiteren Schritt erfolgt das Aufbringen einer Sauerstoff-undurchlässigen Barriereschicht auf das Substrat.

Im Schritt des Aufbringens einer Sauerstoff-undurchlässigen Barriereschicht kann der Fachmann auf aus dem Stand der Technik bekannte Verfahren zurückgreifen. In einer bevorzugten Ausführungsform des erfindungsgemäßen Verfahrens zur Herstellung eines optischen Elements umfasst der Schritt des Aufbringens der Sauerstoff-undurchlässigen Barriereschicht ein Tauchverfahren, Sprühverfahren oder Spincoatverfahren. Solche Verfahren können zunächst das Lösen oder Suspendieren des mindestens einen, die Sauerstoff-undurchlässige Barriereschicht bildenden Polymers und gegebenenfalls weiterer Komponenten in einem Lösungsmittel umfassen. Für das die Sauerstoff-undurchlässige Barriereschicht bildende Polymer gelten die vorstehenden Ausführungen, wie sie diesbezüglich für das erfindungsgemäße optische Element getroffen worden sind, entsprechend. Anschließend wird die Lösung oder Suspension entsprechend dem Tauchverfahren, Sprühverfahren oder Spincoatverfahren, durch Eintauchen des Substrats in ein mit der Lösung oder Suspension gefülltes Bad und Herausziehen bei einer Geschwindigkeit von 0,5 bis 4 mm/s, bevorzugt 0,57 bis 2 mm/s, Aufsprühen der Lösung oder Suspension auf das Substrat oder Auftragen der Suspension oder Lösung auf das Substrat und anschließendem Rotieren des Substrats auf das Substrat aufgebracht. In einem Spincoatverfahren kann das Substrat bereits während des Auftragens des Mediums, aus welchem die Sauerstoff-undurchlässige Barriereschicht gebildet wird, mit einer Geschwindigkeit von 50 bis 200 Umdrehungen pro Minute rotiert werden. Nach Aufbringen des Mediums wird das Substrat für 5 bis 30 Sekunden, bevorzugt 10 bis 20 Sekunden, mit einer Geschwindigkeit von 200 bis 700 Umdrehungen pro Minute, bevorzugt 300 bis 600 Umdrehungen pro Minute, besonders bevorzugt 400 bis 500 Umdrehungen pro Minute, rotiert. Bevorzugt wird die Sauerstoff-undurchlässige Schicht mittels Tauchverfahren oder Spincoatverfahren aufgebracht.

Die Sauerstoff-undurchlässige Barriereschicht wird anschließend durch Entfernen des Lösungsmittels der auf das Substrat aufgebrachten Lösung oder Suspension, beispielsweise durch Trocknung oder Abdampfen des Lösungsmittels, in eine feste Form überführt. Die Trocknung kann bei Raumtemperatur bis 200°C, bevorzugt 40°C bis 150 °C und besonders bevorzugt bei 60°C bis 90°C durchgeführt werden. Dabei ist dem Fachmann bekannt, dass die Dauer der Trocknung von der Temperatur und dem Siedepunkt des Lösungsmittels abhängt. Beispielsweise kann die Trocknung für 2 bis 25 Minuten, bevorzugt 5 bis 10 Minuten, durchgeführt werden.

Sofern weitere Schichten in dem herzustellenden optischen Element vorgesehen sind, kann das erfindungsgemäße Verfahren zur Herstellung in der entsprechenden Reihenfolge um die entsprechenden Schritte des Aufbringens der weiteren Schichten ergänzt werden. Unter Anderem kann so gegebenenfalls zusätzlich eine Hartschicht, eine Antireflexionsschicht und/oder eine Pflegeleichtschicht aufgebracht werden. Wie vorstehend erwähnt, können die Hartschicht und die Antireflexionsschicht, sofern vorgesehen, mittels Tauchverfahren, Sprühverfahren oder Spincoatverfahren oder mittels physikalischer oder chemischer Gasphasenabscheidung aufgebracht werden. Das Substrat kann zudem vorab mit einer Grundierungsschicht versehen werden. Auch hier gelten die vorstehenden Ausführungen, wie sie diesbezüglich für das erfindungsgemäße optische Element getroffen worden sind, entsprechend.

In einem weiteren Aspekt betrifft die vorliegende Anmeldung die Verwendung eines optischen Elements. Das optische Element kann für ophthalmische Zwecke, als Gläser für Brillen aller Art, wie Sonnenbrillen, Schutzbrillen, Skibrillen und Visiere für Helme verwendet werden.

### Figurenbeschreibung

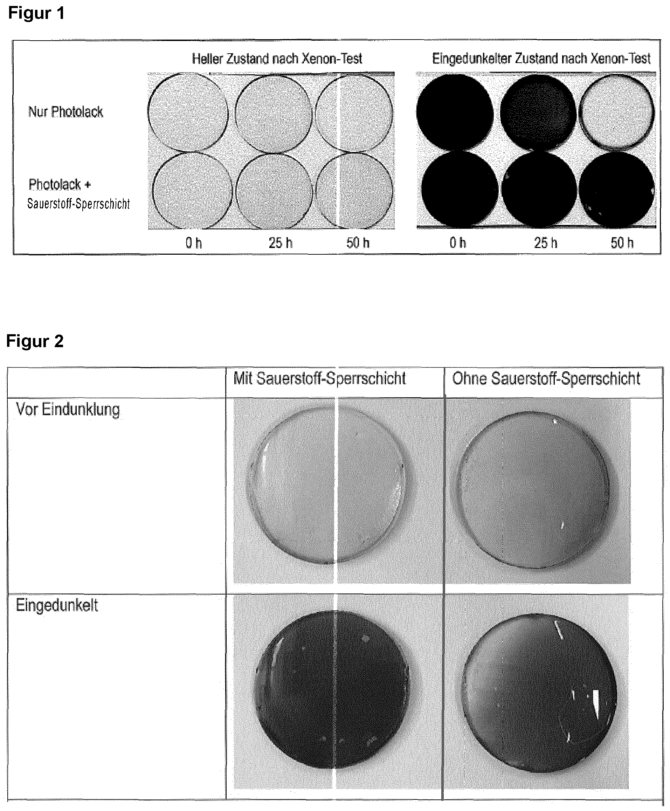

Figur 1 zeigt das Degradationsverhalten der photochromen Schicht eines optischen Elements, umfassend eine Sauerstoff-undurchlässige Barriereschicht, die durch Spincoating aufgetragen wurde, im Vergleich zu einer photochromen Schicht eines optischen Elements, welches keine Sauerstoff-undurchlässige Barriereschicht umfasst, nach beschleunigter Alterung durch Bestrahlung mit einer Xenon-Lampe, wobei beide optischen Elemente keine zusätzliche Hartschicht beinhalten.
Figur 2 zeigt die unterschiedliche Degradation einer photochromen Schicht in optischen Elementen mit und ohne eine durch ein Tauchverfahren aufgebrachten Sauerstoff-undurchlässigen Barriereschicht nach beschleunigter Alterung durch Bestrahlung mit einer Xenon-Lampe, wobei beide optischen Elemente zusätzlich eine Hartschicht beinhalten.

### Beispiele

Die nachstehenden Beispiele dienen der weiteren Erläuterung der vorliegenden Erfindung, ohne jedoch hierauf beschränkt zu sein.

In einer ersten beispielhaften Ausführungsform wird ein optisches Element mit einer Sauerstoff-undurchlässigen Barriereschicht und ein dazu identisches Element ohne Sauerstoff-undurchlässige Barriereschicht wie folgt hergestellt:
Es wird ein Substrat, bestehend aus einem thermisch vernetzten Acrylat-Polymer, in Form einer Planscheibe, die eine Dicke von 3 mm, einen Durchmesser von 60 mm und einen optischen Brechungsindex von 1,5 aufweist, bereitgestellt. Das Substrat umfasst eine darauf angeordnete photochrome Schicht mit einer Dicke von 5 µm. Die photochrome Schicht enthält einen photochromen Farbstoff und ein Acrylat-Polymer. Die photochrome Schicht wurde als Lösung mit 1-Methoxy-2-propanol als Lösungsmittel aufgebracht und durch Trocknung gehärtet. Eine Sauerstoff-undurchlässige Barriereschicht wird durch Spincoating unter Verwendung einer wässrigen 5%igen Ethylen-Vinylalkohol-Copolymer Lösung, die ein n-Propanol:Wasser-Gemisch im Verhältnis von 3:7 aufweist, aufgetragen. Dabei wird 1 mL der Lösung auf das Substrat, welches mit einer Rotationsgeschwindigkeit von 100 Umdrehungen pro Minute rotiert wird, aufgebracht. Das eingesetzte Ethylen-Vinylalkohol-Copolymer weist einen Hydrolysegrad von 99-99,4 mol-% auf. Anschließend wird das Substrat für weitere 12 Sekunden bei einer Rotationsgeschwindigkeit von 450 Umdrehungen pro Minute rotiert. Nachfolgend wird der aufgetragene Film für 5 Minuten bei 90 °C getrocknet und die Sauerstoff-undurchlässige Barriereschicht in fester Form mit einer Schichtdicke von 1,7 µm erhalten.

In einer zweiten beispielhaften Ausführung wird ein optisches Element mit einer Sauerstoff-undurchlässigen Barriereschicht und einer Hartschicht sowie ein dazu identisches Element ohne Sauerstoff-undurchlässige Barriereschicht wie folgt hergestellt:
Es wird ein Substrat, bestehend aus Polythiourethan, in Form eines Wirkungsglases mit einer Dicke von 2 mm, einem Durchmesser von 60 mm, einem optischen Brechungsindex von 1,6 und einer Brechkraft von -2,25 dpt bereitgestellt. Auf dem Substrat ist eine photochrome Schicht mit einer Dicke von 7 µm angeordnet. Die photochrome Schicht enthält einen photochromen Farbstoff und ein Acrylat-Polymer. Die photochrome Schicht wurde als Lösung in 1-Methoxy-2-propanol als Lösungsmittel durch Spincoating aufgebracht und durch Trocknung gehärtet. Das Substrat wird in ein Becken, das eine wässrige 2,5%ige Ethylen-Vinylalkohol-Copolymer Lösung, basierend auf einem n-Propanol:Wasser-Gemisch im Verhältnis von 3:7, getaucht, und mit einer Geschwindigkeit von 1 mm/s herausgezogen. Das Ethylen-Vinylalkohol-Copolymer weist einen Hydrolysegrad von 99-99,4 mol-% auf. Anschließend wird der aufgetragene Film 10 Minuten bei 60°C getrocknet, wodurch die Sauerstoff-undurchlässige Barriereschicht in fester Form erhalten wird. Nach Abkühlen wird das Substrat in eine Hartschicht-bildende Lösung, welche als Lösungsmittel Wasser, Methanol, Ethanol, Isopropanol und 1-Methoxypropanol enthält, eingetaucht und mit einer Geschwindigkeit von 1 mm/s herausgezogen. Durch Vortrocknen bei 60°C für 10 Minuten und anschließendem Härten bei 110°C über 3 Stunden wird eine Hartschicht auf dem Substrat gebildet. Die Hartschicht ist eine Polysiloxan-basierte thermisch gehärtete Schicht.

Die erhaltenen optischen Elemente werden einer beschleunigten Alterung durch Bestrahlung mit einer Xenon-Lampe ohne zusätzliche Kontrolle oder Beeinflussung der Temperatur ausgesetzt und nach 25 und 50 Stunden auf Degradation der photochromen Schicht untersucht (Xenon-Test). Die Xenon-Lampe hat ein sonnenähnliches Emissionsspektrum. Der Abstand zwischen den optischen Elementen und der Xenon-Lampe wird so kalibriert, dass die optischen Elemente einer Bestrahlung mit einer Leistung von 700 W/m² ausgesetzt sind. Der Abstand wird über den Alterungsprozess konstant gehalten.

Die Beurteilung der Degradation der photochromen Schicht der optischen Elemente mit bzw. ohne Sauerstoff-undurchlässige Schicht erfolgt durch visuelle Beurteilung im hellen und eingedunkelten Zustand des optischen Elements. Der eingedunkelte Zustand des optischen Elements wird durch Bestrahlung mit einem Sonnen-Simulator bei einer auf dem optischen Element auftreffenden effektiven Leistung von 4 mW/cm² für die Emission von Strahlung im UVA-Bereich über 0,5 Minuten erreicht. Im eingedunkelten Zustand weist ein optisches Element mit einer unbeschädigten photochromen Schicht eine Gesamttransmission von 10% auf, während es im nicht-eingedunkelten Zustand eine Gesamttransmission von 86% aufweist. Die Gesamttransmission wird in Übereinstimmung mit DIN EN ISO 8980-3 gemessen.

Wie sich aus Figur 1 entnehmen lässt, kann nach einer beschleunigten Alterung über 50 Stunden durch eine Xenon-Lampe für das optische Element mit einer Sauerstoff-undurchlässigen Schicht und ohne eine zusätzliche Hartschicht ein deutliches Eindunkeln festgestellt werden. Die photochrome Schicht kann durch die Sauerstoff-undurchlässige Barriereschicht vor der Degradation durch Sauerstoff und UV-Strahlung geschützt werden. Das optische Element bewahrt seine photochromen Eigenschaften. So kann bei Transmissionsmessungen an dem optischen Element mit einer Sauerstoff-undurchlässigen Schicht nach einer beschleunigten Alterung über 25 Stunden keine Erhöhung der Gesamttransmission festgestellt werden.

Für das entsprechende optische Element ohne eine Sauerstoff-undurchlässige Barriereschicht kann nach einer beschleunigten Alterung über 50 Stunden unter identischen Bedingungen hingegen kein Eindunkeln der photochromen Schicht festgestellt werden. Es tritt über 50 Stunden eine vollständige Degradation der photochromen Schicht auf und das Element verliert vollständig seine photochromen Eigenschaften. Zudem kann nach einer beschleunigten Alterung über 25 Stunden eine Erhöhung der Gesamttransmission von 10% auf 21 % festgestellt werden.

Aus der Figur 2 kann für die optischen Elemente, die weiter eine Hartschicht beinhalten, entnommen werden, dass das optische Element ohne eine Sauerstoff-undurchlässige Barriereschicht nach einer beschleunigten Alterung über 50 Stunden im nicht-eingedunkelten Zustand verschlechterte optische Eigenschaften aufweist, die durch das deutliche Vergilben des Elements visuell erkennbar sind. Ein Vergilben kann bei dem entsprechenden optischen Element mit einer Sauerstoff-undurchlässigen Barriereschicht im nicht-eingedunkelten Zustand nach 50 Stunden beschleunigter Alterung nicht beobachtet werden.

Aus dem Vergleich beider photochromer Elemente, die einer beschleunigten Alterung über 50 Stunden ausgesetzt sind, kann entnommen werden, dass die Degradation der photochromen Schicht in einem erfindungsgemäßen optischen Element durch das Aufbringen einer Sauerstoff-undurchlässigen Barriereschicht vermieden und die Lebensdauer der photochromen Schicht bzw. der photochromen Eigenschaften des erfindungsgemäßen optischen Elements verlängert werden können.

## Patentansprüche

1. Optisches Element, umfassend in der nachstehenden Reihenfolge ein Substrat, eine photochrome Schicht und eine Sauerstoff-undurchlässige Barriereschicht,
wobei die Sauerstoff-undurchlässige Barriereschicht mindestens ein Polymer, ausgewählt aus der Gruppe, bestehend aus Ethylen-Vinylalkohol-Copolymer, Cellulosehydrat, Polyvinylalkohol, Polyacrylnitril, Polyvinyldichlorid, Polyurethan und Polyethylenterephthalat, umfasst,
wobei das optische Element ein Brillenglas ist,
wobei die photochrome Schicht eine Dicke von 30 µm oder weniger aufweist,
**dadurch gekennzeichnet, dass** die
Schichtdicke der Sauerstoff-undurchlässigen Schicht 0,1 µm bis 4 µm beträgt.

2. Optisches Element nach Anspruch 1, wobei die photochrome Schicht direkt auf dem Substrat angeordnet ist.

3. Optisches Element nach einem der Ansprüche 1 oder 2, wobei das mindestens eine Polymer aus der Gruppe, bestehend aus Ethylen-Vinylalkohol-Copolymer, Cellulosehydrat, Polyvinylalkohol, Polyacrylnitril, Polyvinyldichlorid und Polyethylenterephthalat ausgewählt ist.

4. Optisches Element nach einem der Ansprüche 1 bis 3, wobei die Sauerstoff-undurchlässige Barriereschicht direkt auf der photochromen Schicht angeordnet ist.

5. Optisches Element nach einem der Ansprüche 1 bis 4, wobei die photochrome Schicht eine Dicke von 10 µm oder weniger aufweist.

6. Optisches Element nach einem der Ansprüche 1 bis 5, wobei die Schichtdicke der Sauerstoff-undurchlässigen Schicht 0,3 µm bis 2 µm beträgt.

7. Optisches Element nach einem der Ansprüche 1 bis 6, wobei das mindestens eine Polymer eine massengewichtete Molmasse (M_{w}) von 10000 g/mol bis 130 000 g/mol aufweist.

8. Optisches Element nach einem der Ansprüche 1 bis 7, wobei das optische Element weiter mindestens eine Schicht, ausgewählt aus einer Hartschicht und einer Antireflexionsschicht, die auf der von der photochromen Schicht abgewandten Seite der Sauerstoff-undurchlässigen Barriereschicht angeordnet ist, umfasst.

9. Verfahren zur Herstellung eines optischen Elements, umfassend in der nachstehenden Reihenfolge die Schritte:
(a) Bereitstellen eines Substrats,
(b) Aufbringen einer photochromen Schicht und
(c) Aufbringen einer Sauerstoff-undurchlässigen Barriereschicht, vorzugsweise direkt auf die photochrome Schicht,
wobei das optische Element ein Brillenglas ist,
wobei die photochrome Schicht eine Dicke von 30 µm oder weniger aufweist,
charakterisiert dadurch, dass
die Schichtdicke der Sauerstoff-undurchlässigen Schicht 0,1 µm bis 4 µm beträgt.

10. Verfahren nach Anspruch 9, wobei die photochrome Schicht direkt auf das Substrat aufgebracht wird.

11. Verwendung des optischen Elements nach einem der Ansprüche 1 bis 8 für ophthalmische Zwecke als Gläser für Brillen aller Art, wie Sonnenbrillen, Schutzbrillen und Visiere für Helme.

## Claims

1. An optical element comprising, in the following order, a substrate, a photochromic layer, and an oxygen-impermeable barrier layer, wherein the oxygen-impermeable barrier layer comprises at least one polymer selected from the group consisting of ethylene-vinyl alcohol copolymer, cellulose hydrate, polyvinyl alcohol, polyacrylonitrile, polyvinyl chloride, polyurethane, and polyethylene terephthalate,
wherein the optical element is a spectacle lens,
the photochromic layer has a thickness of 30 µm or less,
**characterized in that** the layer thickness of the oxygen-impermeable layer is 0.1 µm to 4 µm .

2. An optical element according to claim 1, wherein the photochromic layer is disposed directly on the substrate.

3. An optical element according to any one of claims 1 or 2, wherein the at least one polymer is selected from the group consisting of ethylene-vinyl alcohol copolymer, cellulose hydrate, polyvinyl alcohol, polyacrylonitrile, polyvinyl chloride, and polyethylene terephthalate.

4. An optical element according to any one of claims 1 to 3, wherein the oxygen-impermeable barrier layer is disposed directly on the photochromic layer.

5. An optical element according to any one of claims 1 to 4, wherein the photochromic layer has a thickness of 10 µm or less.

6. An optical element according to any one of claims 1 to 5, wherein the thickness of the oxygen-impermeable layer is 0.3 µm to 2 µm.

7. An optical element according to any one of claims 1 through 6, wherein the at least one polymer has a weight-average molecular weight (M_{w}) of 10,000 g/mol to 130,000 g/mol.

8. An optical element according to any one of claims 1 to 7, wherein the optical element further comprises at least one layer selected from a hard coating and an antireflective coating, which is disposed on the side of the oxygen-impermeable barrier layer facing away from the photochromic layer.

9. A method for manufacturing an optical element, comprising the following steps in the order listed below:
(a) providing a substrate,
(b) applying a photochromic layer, and
(c) applying an oxygen-impermeable barrier layer, preferably directly onto the photochromic layer,
wherein the optical element is a spectacle lens
wherein the photochromic layer has a thickness of 30 µm or less ,
**characterized in that**
the layer thickness of the oxygen-impermeable layer is 0.1 µm to 4 µm .

10. The method according to claim 9, wherein the photochromic layer is applied directly to the substrate.

11. Use of the optical element according to any one of claims 1 to 8 for ophthalmic purposes as lenses for eyeglasses of all kinds, such as sunglasses, safety glasses, and visors for helmets.

## Revendications

1. Elément optique comprenant, dans l'ordre suivant, un substrat, une couche photochromique et une couche barrière imperméable à l'oxygène, dans lequel la couche barrière imperméable à l'oxygène comprend au moins un polymère choisi dans le groupe constitué par un copolymère d'éthylène-alcool vinylique, l'hydrate de cellulose, l'alcool polyvinylique, le polyacrylonitrile, le dichlorure de polyvinyle, le polyuréthane et le téréphtalate de polyéthylène,
l'élément optique étant un verre de lunettes,
où la couche photochromique a une épaisseur de 30 µm ou moins,
**caractérisé en ce que** l'épaisseur de la couche imperméable à l'oxygène est de 0,1 µm à 4 µm .

2. Elément optique selon la revendication 1, dans lequel la couche photochromique est disposée directement sur le substrat.

3. Elément optique selon l'une des revendications 1 ou 2, dans lequel ledit au moins un polymère est choisi dans le groupe constitué par un copolymère d'éthylène et d'alcool vinylique, l'hydrate de cellulose, l'alcool polyvinylique, le polyacrylonitrile, le dichlorure de polyvinyle et le téréphtalate de polyéthylène.

4. Elément optique selon l'une quelconque des revendications 1 à 3, dans lequel la couche barrière imperméable à l'oxygène est disposée directement sur la couche photochromique.

5. Elément optique selon l'une des revendications 1 à 4, dans lequel la couche photochromique a une épaisseur de 10 µm ou moins.

6. Elément optique selon l'une des revendications 1 à 5, dans lequel l'épaisseur de la couche imperméable à l'oxygène est comprise entre 0,3 µm et 2 µm.

7. Elément optique selon l'une quelconque des revendications 1 à 6, dans lequel ledit au moins un polymère présente une masse molaire pondérée en masse (M_{w}) de 10 000 g/mol à 130 000 g/mol.

8. Elément optique selon l'une quelconque des revendications 1 à 7, dans lequel l'élément optique comprend en outre au moins une couche choisie parmi une couche dure et une couche antiréfléchissante disposée sur le côté de la couche barrière imperméable à l'oxygène opposé à la couche photochromique.

9. Procédé de fabrication d'un élément optique comprenant, dans l'ordre, les étapes suivantes :
(a) Fournir un substrat,
(b) application d'une couche photochromique, et
(c) application d'une couche barrière imperméable à l'oxygène, de préférence directement sur la couche photochromique,
l'élément optique étant un verre de lunettes
la couche photochromique ayant une épaisseur de 30 µm ou moins ,
**caractérisée en ce que**
l'épaisseur de la couche imperméable à l'oxygène est de 0,1 µm à 4 µm .

10. Procédé selon la revendication 9, dans lequel la couche photochromique est appliquée directement sur le substrat.

11. Utilisation de l'élément optique selon l'une quelconque des revendications 1 à 8 à des fins ophtalmiques en tant que verres pour lunettes de tous types, telles que des lunettes de soleil, des lunettes de protection et des visières pour casques.
